Europäisches Patentamt

European Patent Office

Office européen des brevets

(11) Publication number: **0 144 130**
**B1**

(12) **EUROPEAN PATENT SPECIFICATION**

(45) Date of publication of patent specification: 01.03.89

(51) Int. Cl.⁴: **G 01 N 31/22**

(21) Application number: 84306814.9

(22) Date of filing: 05.10.84

(54) Method for the colorimetric determination of polygarboxylates and sulphonates inaqueous systems.

(30) Priority: 11.10.83 US 540330

(43) Date of publication of application:
12.06.85 Bulletin 85/24

(45) Publication of the grant of the patent:
01.03.89 Bulletin 89/09

(84) Designated Contracting States:
AT BE CH DE FR GB IT LI LU NL SE

(56) References cited:
DE-B-1 004 831
GB-A-1 195 972
US-A-3 992 149

PATENTS ABSTRACTS OF JAPAN, vol. 5, no.
175, (P-88)(847) November 11, 1981

(73) Proprietor: CALGON CORPORATION
Route 60-Campbell's Run Road
Robinson Township Pennsylvania 15205 (US)

(72) Inventor: Myers, Ronald R.
408 Scottsdale Drive
Coraopolis Pennsylvania 15108 (US)
Inventor: Fink, Jack E.
RD 1, Box 229A, Darlington
Pennsylvania 15108 (US)

(74) Representative: Crampton, Keith John Allen
et al
D YOUNG & CO 10 Staple Inn
London WC1V 7RD (GB)

# Description

Water has a number of important industrial uses, including its use as a medium to remove heat from process equipment and its use in the generation of steam. Unfortunately, untreated water cannot be used directly for these or other purposes in most instances due to the presence of various impurities which may prevent effective heat transfer, interfere with fluid flow, or corrode equipment. In such cases, the water must be treated to ensure efficient operation. For example, compounds that inhibit scale formation are commonly added to cooling tower and boiler waters to prevent the formation or deposition of scale on equipment in contact with these waters.

Most industrial waters contain metal cations, such as those of calcium, barium, magnesium, and sodium, and anions, such as bicarbonate, carbonate, sulphate, phosphate, silicate, and fluoride. When combinations of these anions and cations are present above certain concentration limits, reaction products are precipitated on the surfaces of equipment in the system containing the water, forming scale or deposits. This precipitation is an expensive problem in many industrial water systems, causing delays and shutdowns for cleaning and removal.

Formation of scale compounds can be prevented by ensuring that the solubility limits of cation-anion reaction products are not exceeded. Certain water-soluble polymers, including polymers derived from unsaturated carboxylates and unsaturated sulphonates, or their salts, are useful for this purpose. When these polymers are added to industrial waters to inhibit scale, their concentrations must be determined frequently in order to properly monitor performance of the system. If too little of a polymer is present, the system may not be adequately protected; if too much, the treatment may not be cost effective. For a given system, there is an optimal treatment concentration which must be maintained. It is therefore desirable to be able to quickly and accurately determine the concentration of treatment chemicals in water systems.

The present invention is concerned with the determination of the concentration of polycarboxylates and/or sulphonates in aqueous systems, more particularly, industrial water systems, including but not limited to boilers, cooling towers, evaporators, gas scrubbers, kilns and desalination units. The method of the invention correlates the intensity of colour developed in the reaction between polycarboxylate and/or sulphonate molecules and various dyes with the concentration of these components in the aqueous system.

Colorimetry is a well known method of chemical analysis. It involves the comparison and matching of a standard colour with that of an unknown one to give an approximation of the concentration of a specific component in the unknown sample. Because the amount of light absorbed by a given substance in solution is proportional to the concentration of the absorbing species, colorimetry is a simple and accurate method for determining unknown concentrations. For example, if the concentration of a polymer in an aqueous system must be determined, a sample can be taken; the absorbency of the sample in the presence of a suitable dye can then be measured and compared with a calibration curve in order to quickly and accurately estimate the concentration of the polymer in the aqueous system. This mode of testing is advantageous in that it can easily be performed at the application site.

Japanese Patent Specification JP—A—56 104 248, as abstracted in "Patents Abstracts of Japan" Vol. 5, No. 175, page 88, discloses a method of measuring an anionic polymer concentration of a liquid by passing it through a thin transparent tube filled with $CaCO_3$ powder before passing a toluidine blue solution through the tube and measuring the length of the coloured zone formed, and comparing it with the length using an anionic polymer solution of known concentration in order to measure the concentration.

US Patent Specification US—A—3 992 149 discloses a method of colorimetric testing of various aqueous materials to determine the concentration of ionic surfactants by addition of a buffer solution, a suitable dye and chloroform to the aqueous material, allowing the chloroform layer to separate, and comparing the absorbence or the like of the chloroform layer at a desired wavelength with a known standard.

The present invention is based on the discovery that cerain metachromatic dyes are suitable for use in colorimetrically determining the concentration of polycarboxylates and sulphonates in aqueous systems.

Certain dyes undergo a unique colour change upon interaction with polyionic compounds in solution. This colour change, known as metachromaticity, is the basis for the colorimetric method used in accordance with the present invention. When anionic polymers contact a metachromatic dye, the dye molecules become aligned with the anionic charges on the polymers, resulting in a shift in the wavelength of maximum absorbency of the dye molecule. This shift is observable as a colour change in the solution containing the dye and the polymer. Since polycarboxylates and sulphonates, which are anionic, induce a metachromatic change in certain dyes, their concentrations in aqueous solutions can be determined colorimetrically by measuring the absorbency, at a specified wavelength, of a solution containing polycarboxylates and/or sulphonates and a metachromatic dye and comparing this absorbency to absorbencies of standards having known concentrations of the species being measured.

The term "selectivity", as used herein, relates to the ability of a test method to differentiate between different species in the sample solution. The selectivity of this test method is excellent between sulphonates and polycarboxylates due to their relative acid strengths. At a low pH, for example less than 3.0, relatively few carboxylic acid groups have charges since they are largely associated with hydrogen ions, while sulphonic acid groups, being derived from stronger acids than carboxylic groups, are ionized at a pH as low as 2.5. Sulphonic acid groups can therefore induce metachromatic colour changes at a pH less than 3.0, while carboxylic acid groups generally do not. At a pH greater than 3.0, both carboxylic and sulphonic acid groups induce metachromatic changes in certain dyes. This allows a skilled chemist to determine the concentrations of sulphonates alone, or of sulphonates and polycarboxylates, by using a suitable metachromatic dye and measuring absorbencies at the proper pH and wavelength.

The test method of the present invention for determining the concentration of polycarboxylic and/or sulphonic acid groups in an aqueous solution consists essentially of:

(a) adjusting the pH of a sample portion of the said aqueous solution to between 3.0 and 12.0;

(b) adding an effective amount of an aqueous solution of a metachromatic dye to the pH-adjusted sample portion obtained in Step (a), where "effective amount" means an amount of the dye solution that, when added to the adjusted sample portion obtained in Step (a), results in a dye to acid group molar ratio of from 0.1:1 to 100:1 in the admixture, thereby causing a shift in the dye's wavelength of maximum absorbency for that portion of the dye that aligns with anionic charges of the acid groups:

(c) measuring the absorbency of the admixture resulting from Step (b) at the said shifted wavelength of maximum absorbence; and

(d) comparing the absorbency from Step (c) with absorbencies of a calibration curve obtained with standard samples containing known concentrations of sulphonic and/or carboxylic acid groups, thereby determining the concentration of carboxylic and/or sulphonic acid groups in the said sample portion.

The present invention also provides a method for determining the concentration of sulphonic acid groups in an aqueous solution consisting essentially of:

(a) adjusting the pH of a sample portion of the said aqueous solution to a pH less than 3.0;

(b) adding an effective amount of an aqueous solution of a metachromatic dye to the pH-adjusted sample portion obtained in Step (a), where "effective amount" means an amount of the dye solution that, when added to the sample portion obtained in Step (a), results in a dye to sulfonic acid group molar ratio of from 0.1:1 to 100:1 in the admixture, thereby causing a shift in the dye's wavelength of maximum absorbency for that portion of the dye that aligns with anionic charges of the acid groups;

(c) measuring the absorbency of the admixture resulting from Step (b) at the said shifted wavelength of maximum absorbence; and

(d) comparing the absorbency from Step (c) with absorbencies of a calibration curve obtained with standard samples containing known concentrations of sulphonic acid groups thereby determining the concentration of sulphonic acid groups in the said sample portion.

The methods of the present invention have been found to be selective in that anions most commonly found in water samples, for example $Cl^-$, $HCO_3^-$ and $SO_4^-$, among others, do not significantly alter the metachromaticity of dye molecules. It can be used to quickly and accurately determine the concentration of polycarboxylates and/or sulphonates in aqueous systems.

Polycarboxylates include polymers produced from any unsaturated carboxylic acid or salt thereof, including but not limited to acrylic acid, methacrylic acid, maleic acid, itaconic acid, vinylacetic acid, allyl acetic acid, fumaric acid, phosphinocarboxylic acid, and β-carboxyethyl acrylate, alone or in combination.

Sulphonates include polymers produced from any unsaturated sulphonic acid or salt thereof, including but not limited to 2 - acrylamido - 2 - methylpropylsulphonic acid, 2 - methacrylamido - 2 - methylpropylsulphonic acid, styrenesulphonic acid, vinylsulphonic acid, sulpho acrylate or methacrylate, allylsulphonic acid, methallylsulphonic acid, 3 - methacrylamido - 2 - hydroxypropylsulphonic acid and sulphonic acid acrylate, alone or in combination.

Polycarboxylates and sulphonates, as used herein, also include polymers produced by combining any unsaturated carboxylic acid or its salt with any unsaturated sulphonic acid or its salt.

The method of the invention is especially effective when the species to be measured is a water-soluble polycarboxylate used as a scale inhibitor, such as a polymer made using acrylic acid, alone or in combination with acrylamide or other monomers, or a hydrolysed polymer of acrylamide. The method is also especially effective when the species to be measured is a water-soluble polysulphonate used as a scale inhibitor, such as a copolymer made using an unsaturated carboxylic monomer and an unsaturated sulphonate monomer in which the ratios of the respective monomers range from 99:1 to 1:99.

The sample or portion of Step (a) may be any convenient amount of the aqueous solution containing polycarboxylate and/or sulphonate compounds. Pretreatment of the sample or portion of Step (a) may be desirable. Examples of pretreatment steps include filtration of the sample or portion to remove particulate material; addition of an effective amount of a reducing agent to reduce chlorine and/or ferric iron, if present, to minimize interference from these components; dilution of the sample or portion to bring the concentration of the component being measured within the concentration range of standard samples; and adding an effective amount of thorium to the sample or portion to eliminate or minimize hexametaphosphate interference. Hexametaphosphate interference may also be minimized by the addition of an effective amount of an acid to the sample or portion followed by boiling.

The preferred pH range for polycarboxylates is 6.5 to 7.5 and for sulphonates is 2.4 to 2.6. Many suitable agents for pH adjustment are known, including chloroacetic acid/sodium chloroacetate, $KH_2PO_4$/NaOH, potassium-hydrogen phthalate/hydrochloric acid and sodium bicarbonate/sodium hydroxide buffer solutions.

Any metachromatic dye can be used in a colorimetric test to determine the polycarboxylate and/or sulphonate concentrations in an aqueous solution. Metachromatic dyes are those that undergo a colour change upon interaction with polyionic compounds. Examples of metachromatic dyes include crystal violet, methyl green, malachite green, acridin orange and pararosaniline. Metachromatic dyes selected from nile blue A, neutral red, safrin O, methylene blue, methyl red, toluidine blue, new methylene blue, quinalizarin, tetrachrome, brilliant blue G, mordant black II and pinacyanol chloride have been found to be most suitable for use in a colorimetric test to determine polycarboxylate and/or sulphonate concentrations in aqueous systems. The preferred dyes are nile blue A and pinacyanol chloride, particularly pinacyanol chloride. For any metachromatic dye used, the mole ratio of dye molecules to sulphonate and/or polycarboxylate groups should be from 0.1:1 to 100:1.

The preferred dye concentration is in the range $1\times10^{-6}$ M to $1\times10^{-3}$ M. However, since the "effective amount" referred to in Step (b) is based on the ratio of moles of dye to the moles of sulphonate and/or polycarboxylate groups in the admixture of Step (b), and since the effective amount of dye must result in an absorbency between 0.01 and 2.0 as measured on a spectrophotometer, tradeoffs exist between the concentration of the dye solution used, the quantity of the dye solution added, and the length of light path (i.e. the cell length) used to measure absorbency. For example, as the length of light path decreases, the number of moles of dye molecules present in the admixture of Step (b) should be increased. This can be accomplished by either using a dye solution of higher concentration or by adding more of a dye solution of lower concentration. It is within the reach of the skilled chemist to balance these variables so as to obtain an absorbency between 0.01 and 2.0 on the spectrophotometer used.

Absorbency, as used herein, may be defined according to the Lambert-Beer Law as follows:

$$A=abc,$$

where
A=absorbency,
a=absorptivity of the dye,
b=light path length, and
c=concentration of the coloured substance.

Each dye used will have a range of maximum absorbency within the 300 to 700 nm range, and it is desirable to measure absorbency at a wavelength within this range of maximum absorbency. Any spectrophotometer may be used. The preferred wavelength for determining the concentration of sulphonates is 480 to 490 nm when pinacyanol chloride is the dye, and the preferred wavelength for determining the concentration of polycarboxylates is 590 to 640 nm when pinacyanol chloride is the dye. The preferred wavelength for determining the concentration of polycarboxylates or sulphonates is 630 to 640 when nile blue A is the dye.

An effective amount of an aqueous solution of a metachromatic dye, in addition to being an amount which will, when added to the portion of Step (a), result in a dye to polycarboxylate group and/or sulphonate group mole ratio between 0.1 and 100, should preferably result in an absorbency between 0.01 and 2.0 on the spectrophotometer used, thereby placing the spectrophotometer "on scale".

Standard samples containing known concentrations of sulphonates and/or polycarboxylates and an effective amount of dye should be prepared for comparison purposes. For example, if sulphonate concentration is to be measured in an aqueous system, samples containing known concentrations of the sulphonate to be measured should be prepared. The concentration range of the standard samples should include the expected or possible concentration range of the unknown sample. An effective amount of a metachromatic dye should then be added to each standard sample and to the unknown sample or portion. The effective amount of dye solution added to each standard sample should be equivalent to the effective amount of dye solution added to the unknown sample or portion, and each standard sample should be equal in volume to the unknown sample or portion. Absorbencies of the standard samples and of the unknown sample should then be measured. By comparison of the absorbency of the unknown sample with those of the standard samples, concentration of the sulphonate in the unknown sample can be estimated.

The following Examples are illustrative of the method of the present invention and preferred embodiments.

The results of certain Examples are plotted in the accompanying drawings, in which:—

Figure 1 shows the relationship between absorbency and sulphonate concentration as determined by the method described in Example 1;

Figure 2 shows the relationship between absorbency and polyacrylate concentration as determined by the method described in Example 3;

Figure 3 shows the relationship between absorbency and polyacrylate concentration as determined by the method described in Example 5;

Figure 4 shows the relationship between absorbency and the concentration of a carboxylic acid/sulphonic acid copolymer as determined by the method described in Example 7.

Example 1
Preparation of colorimetric standards
sulphonates with pinacyanol chloride:

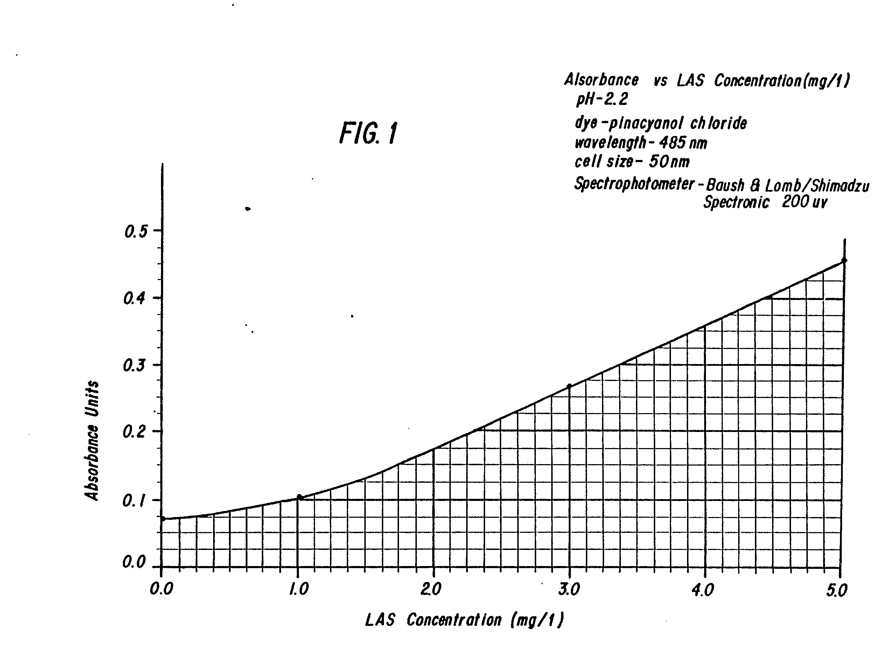

A linear alkyl benzene sulphonate (LAS) stock solution was prepared by diluting 0.117 g of an Environmental Protection Agency (EPA) LAS reference standard solution containing 5.97 percent LAS to 100 ml with water. From this LAS stock solution were prepared LAS standards containing 1.0, 3.0 and 5.0 mg/l LAS by diluting 1.43, 4.29 and 7.15 ml of the stock solution to 100 ml with water. To 5.0 ml of each of the LAS standards and to 5.0 ml of deionized water were added 0.05 g of ascorbic acid and 0.50 ml of a buffer solution containing 2 M chloroacetic acid, 1 M sodium chloroacetate and 60 mg/l thorium. The resulting pH was 2.2. 12.5 ml of a $9 \times 10^{-5}$ M aqueous solution of pinacyanol chloride was then added to each of these four solutions. The resulting mole ratios of dye molecules to sulphonate groups were 70.0:1, 23.0:1, 14.0:1 and 0:1 (deionized water). The intensity of the blue colour developed was measured for each standard at a wavelength of 485 nm in a 50 mm (light path length) cell using a Bausch & Lomb/Shimadzu Spectronic 200 uv spectrophotometer. A calibration curve of absorbency against LAS concentration was prepared and is shown as Figure 1.

Example 2
Determination of sulphonate concentrations in river water using pinacyanol chloride

5.0 ml of a filtered river water containing 4.0 mg/l of LAS was prepared using the EPA reference standard solution of Example 1. To the sample were added 0.05 g of ascorbic acid and 0.50 ml of a buffer solution contain 2 M chloroacetic acid, 1 M sodium chloroacetate and 60 mg/l thorium. The resulting pH was 2.2. 12.5 ml of a $9 \times 10^{-5}$ M aqueous solution of pinacyanol chloride was added to the treated river water sample. The intensity of the blue colour developed was measured at a wavelength of 485 nm in a 50 mm cell (light path length) using the spectrophotometer of Example 1. The absorbency was 0.38 absorbency units. Comparison of the absorbency of the sample with those of the LAS standards shown in Figure 1 indicated an LAS concentration of approximately 4.1 mg/l in the river water. The error of 0.1 mg/l is within the expected 10 percent accuracy range of the test.

Example 3
Preparation of colorimetric standards acrylates with pinacyanol chloride:

Polyacrylate standards containing 1.0, 2.0 and 5.0 mg/l of a commercially available polyacrylate having a molecular weight between 2000 and 3000 were prepared by diluting a 1000 mg/l polyacrylate analytical standard solution available from Calgon Corporation with water. To 10.0 ml of each of the above standards and to 10.0 ml of deionized water was added 1.0 ml of a buffer solution containing 0.062 M $KH_2PO_4$ and 0.038 M NaOH. The resulting pH was 6.8. 2 ml of a $9 \times 10^{-5}$

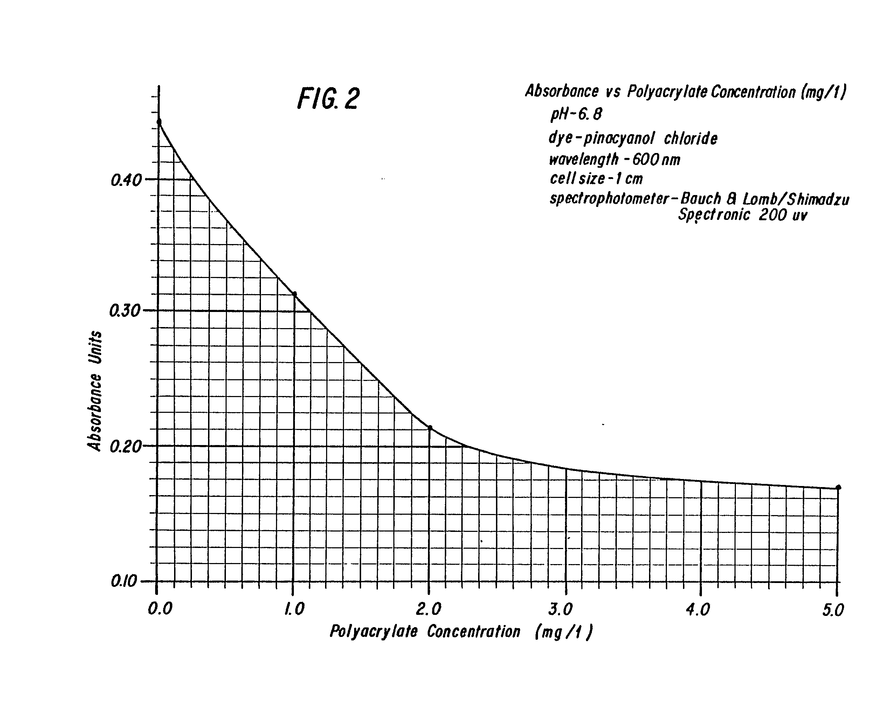

M aqueous solution of pinacyanol chloride was then added to each of these four solutions. The resulting mole ratios of dye molecules to carboxylic acid groups were 1.3:1, 0.6:1, 0.3:1 and 0:1 (deionized water). The intensity of the resultant colour was measured for each standard in a 1 cm cell (light path length) at 600 nm using the spectrophotometer of Example 1. A calibration curve of absorbency against polyacrylate concentration was prepared and is shown in Figure 2.

Example 4
Determination of polyacrylate concentration in an industrial cooling tower makeup water using pinacyanol chloride:

A filtered cooling tower makeup water sample containing 10 mg/l polyacrylate was prepared using the polyacrylate analytical standard solution of Example 3. This sample was then diluted by a factor of 10 to ensure that the concentration of polyacrylate in the sample would be within the concentration range of the standards of Example 3. To 10.0 ml of the diluted sample was added 1.0 ml of a buffer containing 0.062 M $KH_2PO_4$ and 0.038 M NaOH. The resulting pH was 6.8. 2 ml of a $9 \times 10^{-5}$ aqueous solution of pinacyanol chloride was then added. The intensity of the resultant colour was measured in a 1 cm cell (light path length) at 600 nm using the spectrophotometer of Example 1. The absorbency was 0.32 absorbency units. Comparison of the absorbency of the diluted sample with the absorbencies of polyacrylate standards shown in Figure 2 indicated a polyacrylate concentration of approximately 0.925 mg/l, which is within the expected 10 percent accuracy range of the test.

Example 5
Preparation of colorimetric standards acrylates with nile blue A:

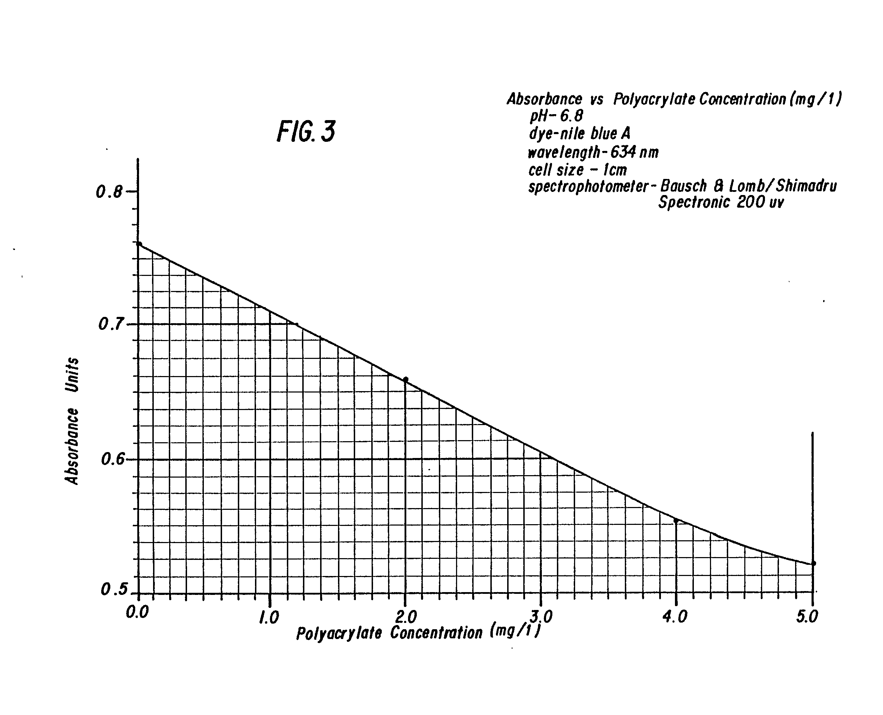

Polyacrylate standards of 2.0, 4.0 and 5.0 mg/l were prepared by diluting the commercially available 1000 mg/l polyacrylate analytical standard solution of Example 3. To 10.0 ml of each of the above standards and to 10.0 ml deionized water were added 20.0 ml of a buffer solution containing 0.0062 M $KH_2PO_4$ and 0.0038 M NaOH. The resulting pH was 6.8. 2 ml of a $5.6 \times 10^{-4}$ M aqueous solution of nile blue A was then added to each of these four solutions. The resulting mole ratios of dye molecules to carboxylic acid groups were 7.8:1, 3.9:1, 1.0:1 and 0:1 (deionized water) The intensity of the colour developed was measured for each standard at a wavelength of 634 nm in a 1 cm cell (light path length) using the spectrophotometer of Example 1. A calibration curve of absorbency against polyacrylate concentration was prepared and is shown as Figure 3.

Example 6
Determination of polyacrylate concentration in an industrial cooling tower water using nile blue A:

10.0 ml of filtered industrial cooling tower water containing 5.4 mg/l polyacrylate was prepared using the commercially available 1000 mg/l poly-

acrylate analytical standard solution of Example 3. To this sample was added 20.0 ml of a buffer solution containing 0.0062 M $KH_2PO_4$ and 0.0038 M NaOH. The resulting pH was 6.8. 2 ml of $5.6 \times 10^{-4}$ M aqueous solution of nile blue A was then added. The intensity of the colour developed was measured in a 1 cm cell (light path length) at 634 nm using the spectrophotometer of Example 1. The absorbency was 0.52 absorbency units. Comparison of the sample absorbency with the absorbencies of polyacrylate standards shown in Figure 3 indicated a polyacrylate concentration of approximately 5.0 mg/l polyacrylate, which is within the expected 10 percent accuracy range of the test.

Example 7
Preparation of colorimetric standards carboxylic acid/sulfonic acid copolymer with pinacyanol chloride:

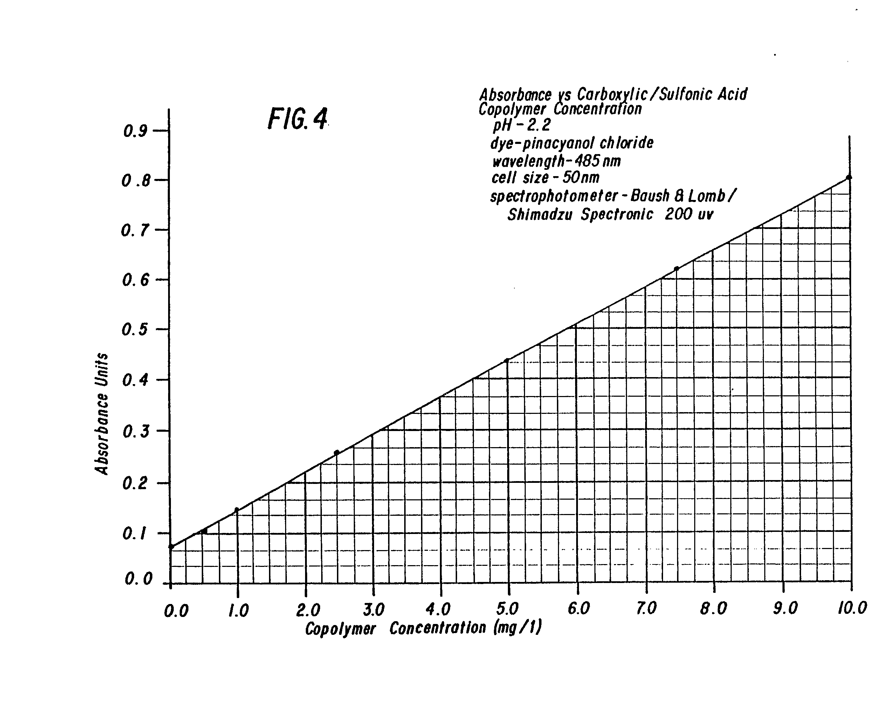

Standard solutions containing 1.0, 2.5, 5.0, 7.5 and 10.0 mg/l of an acrylic acid (AA)/2 - acrylamido - 2 - methyl propyl sulphonic acid (AMPS) copolymer having a 60:40 AA:AMPS weight ratio and a molecular weight of 8000 to 10,000 were prepared by diluting the appropriate volume of a 1000 mg/l stock solution of the copolymer with water. To 5.0 ml of each of the standards and to 5.0 ml of deionized water were added 0.05 g of ascorbic acid and 0.50 ml of a buffer solution containing 2 M chloracetic acid, 1 M sodium chloroacetate, and 60 mg/l thorium. The resulting pH was 2.2. 12.5 ml of a $9 \times 10^{-5}$ M aqueous solution of pinacyanol chloride was then added to each of these four solutions. The resulting mole ratios of dye molecules to organic acid groups were 22.0:1, 11.0:1, 5.5:1, 3.7:1, 2.8:1 and 0:1 (deionized water). The intensity of the blue colour developed was measured at a wavelength of 485 nm in a 50 mm cell (light paht length) using the spectrophotometer of Example 1. A calibration curve of absorbency against copolymer concentration was prepared and is shown as Figure 4.

Example 8
Determination of a carboxylic acid/sulphonic acid copolymer concentration in an industrial cooling tower water:

5.0 ml of filtered industrial cooling tower water containing 1.0 mg/l of the copolymer of Example 7 was prepared. To this sample were added 0.05 g of ascorbic acid and 0.50 ml of a buffer solution containing 2 M chloroacetic acid, 1 M sodium chloroacetate, and 60 mg/l thorium. The resulting pH was 2.2. 12.5 ml of a $9 \times 10^{-5}$ M aqueous solution of pinacyanol chloride was then added to the sample of cooling-tower water. The intensity of the blue colour developed was measured at a wavelength of 485 nm in a 50 mm cell (light path length) using the spectrophotometer of Example 1. The absorbency was 0.815 absorbency units. Comparison of the absorbency of the sample with the absorbency of copolymer standards shown in Figure 4 indicated a copolymer concentration of approximately 10 mg/l in the cooling tower water, which is within the 10 percent accuracy limit of the test.

Examples 7 and 8 demonstrate that the concentrations of molecules containing both polycarboxylate and sulphonate groups, for example copolymers, can be measured by the method of the present invention. However, if water contains polycarboxylates and sulphonates that are independent of each other (i.e. mixtures rather than copolymers), the concentration of both or either can be measured. First, the test method would be conducted at a pH greater than or equal to 3.0, which would allow determination of the sum of the polycarboxylate and sulphonate concentrations. Next, the test method would be conducted at a pH less than 3.0, which would allow determination of the sulphonate concentration alone since, at a pH less than 3.0, polycarboxylates do not usually induce metachromatic charges in dyes. The polycarboxylate concentration could then be determined by difference.

Other uses of this invention will be apparent. Although one important use of the invention involves determining the concentration of polycarboxylate and sulphonate scale inhibitors in boiler or cooling waters, the invention is not limited to applications relating to scale inhibition or to boiler and cooling water applications. The invention can be used to determine the concentration of polycarboxylates and sulphonates in aqueous systems irrespective of the purpose for which the polycarboxylates and/or sulphonates are used or of the purpose for which the water containing them is used.

Claims

1. A method for determining the concentration of carboxylic acid groups and/or sulphonic acid groups present in an aqueous solution, that consists essentially of:

(a) adjusting the pH of a sample portion of the said aqueous solution to between 3.0 and 12.0;

(b) adding an effective amount of an aqueous solution of a metachromatic dye to the pH-adjusted sample portion obtained in Step (a), where "effective amount" means an amount of the dye solution that, when added to the adjusted sample portion obtained in Step (a), results in a dye to acid group molar ratio of from 0.1:1 to 100:1 in the admixture, thereby causing a shift in the dye's wavelength of maximum absorbency for that portion of the dye that aligns with anionic charges of the acid groups;

(c) measuring the absorbency of the admixture resulting from Step (b) at the said shifted wavelength of maximum absorbence; and

(d) comparing the absorbency from Step (c) with absorbencies of a calibration curve obtained with standard samples containing known concentrations of sulphonic and/or carboxylic acid groups, thereby determining the concentration of carboxylic and/or sulphonic acid groups in the said sample portion.

2. A method as claimed in Claim 1 in which the dye is nile blue A, neutral red, safrin O, methylene blue, methyl red, toluidine blue, new methylene blue, quinalizarin, tetrachrome, brilliant blue G, mordant black II or pinacyanol chloride.

3. A method as claimed in Claim 2 in which the dye is pinacyanol chloride, the concentration of pinacyanol chloride is from $1 \times 10^{-6}$ M to $1 \times 10^{-3}$ M, and the absorbency is measured at a wavelength between 590 nm and 640 nm.

4. A method as claimed in any one of Claims 1 to 3 in which the starting sample portion of the aqueous solution has been pretreated by:

(a) filtering to remove particulate material;

(b) adding a reducing agent to reduce chlorine and/or ferric iron if present, thereby minimizing their interefence with the test;

(c) optionally adding thorium to minimize hexametaphosphate interference; and/or

(d) optionally, adding an acid to minimize hexametaphosphate interference; and

(e) boiling the said pretreated sample portion.

5. A method as claimed in any one of Claims 1 to 4 in which the carboxylic acid groups are present in a water-soluble polycarboxylate.

6. A method for determining the concentration of sulphonic acid groups in an aqueous solution consisting essentially of:

(a) adjusting the pH of a sample portion of the said aqueous solution to a pH less than 3.0;

(b) adding an effective amount of an aqueous solution of a metachromatic dye to the pH-adjusted sample portion obtained in Step (a), where "effective amount" means an amount of the dye solution that, when added to the sample portion obtained in Step (a), results in a dye to sulfonic acid group molar ratio of from 0.1:1 to 100:1 in the admixture, thereby causing a shift in the dye's wavelength of maximum absorbency for that portion of the dye that aligns with anionic charges of the acid groups;

(c) measuring the absorbency of the admixture resulting from Step (b) at the said shifted wavelength of maximum absorbence; and

(d) comparing the absorbency from Step (c) with absorbencies of a calibration curve obtained with standard samples containing known concentrations of sulphonic acid groups, thereby determining the concentration of sulphonic acid groups in the said sample portion.

7. A method as claimed in Claim 6 in which the dye is nile blue A, neutral red, safrin O, methylene blue, methyl red, toluidine blue, new methylene blue, quinalizarin, tetrachrome, brilliant blue G, mordant black II or pinacyanol chloride.

8. A method as claimed in Claim 7 in which the dye is pinacyanol chloride, the concentration of pinacyanol chloride is from $1 \times 10^{-6}$ M and $1 \times 10^{-3}$ M, and the absorbency is measured at a wavelength between 480 nm and 490 nm.

9. A method as claimed in any one of Claims 6 to 8 in which the starting sample portion of the aqueous solution has been pretreated by:

(a) filtering to remove particulate material;

(b) adding a reducing agent to reduce chlorine and/or ferric iron if present, thereby minimizing their interference with the test;

(c) optionally adding thorium to minimize hexametaphosphate interference; and/or

(d) optionally, adding an acid to minimize hexametaphosphate interference; and

(e) boiling the said pretreated sample portion.

10. A method as claimed in any one of Claims 6 to 9 in which the sulphonic acid groups are present in a copolymer of an unsaturated carboxylic monomer and an unsaturated sulphonate monomer, and the ratios of the respective monomers range from 99:1 to 1:99.

**Patentansprüche**

1. Ein Verfahren zur Bestimmung der in einer wässerigen Lösung vorliegenden Konzentration von Carbonsäuregruppen und/oder Sulfonsäuregruppen, das im wesentlichen besteht aus:

(a) dem Einstellen des pH-Wertes eines Probenanteils der genannten wässerigen Lösung auf einen Wert zwischen 3,0 und 12,0;

(b) dem Zugeben einer wirksamen Menge einer wässerigen Lösung eines metachromatischen Farbstoffes zu dem in Stufe (a) erhaltenen Probenanteil mit eingestelltem pH-Wert, wobei "wirksame Menge" eine Menge der Farbstofflösung bedeutet, die, wenn sie zu dem in Stufe (a) erhaltenen, eingestellten Probenanteil zugesetzt wird, zu einem Molverhältnis von Farbstoff zu Säuregruppe führt, das in dem Gemisch 0,1:1 bis 100:1 beträgt, wobei eine Verschiebung der Wellenlänge der maximalen dekadischen Extinktion des Farbstoffes für jenen Teil des Farbstoffes bewirkt wird, der sich mit den anionischen Ladungen der Säuregruppen abgleicht;

(c) dem Messen der dekadischen Extinktion des aus Stufe (b) erhaltenen Gemisches bei der genannten verschobenen Wellenlänge maximaler dekadischer Extinktion; und

(d) dem Vergleichen der dekadischen Extinktion von Stufe (c) mit dekadischen Extinktionen einer Eichkurve, die mit bekannte Konzentrationen von Sulfonsäure- und/oder Carbonsäuregruppen enthaltenden Standardproben erhalten worden ist, wobei die Konzentration von Carbonsäure- und/oder Sulfonsäuregruppen in dem genannten Probenanteil bestimmt wird.

2. Ein Verfahren wie in Anspruch 1 beansprucht, wobei der Farbstoff Nilblau A, Neutralrot, Safrin O, Methylenblau, Methylrot, Toluidinblau, Neumethylenblau, Chinalizarin, Tetrachrom, Brillinantblau G, Beizenschwarz II oder Pinacyanolchlorid ist.

3. Ein Verfahren wie in Anspruch 2 beansprucht, wobei der Farbstoff Pinacyanolchlorid ist, die Konzentration von Pinacyanolchlorid $1 \times 10^{-6}$ M bis $1 \times 10^{-3}$ M beträgt, und die dekadische Extinktion bei einer Wellenlänge zwischen 590 nm und 640 nm gemessen wird.

4. Ein Verfahren wie in einem der Ansprüche 1 bis 3 beansprucht, wobei der Ausgangsprobenanteil der wässerigen Lösung vorbehandelt worden ist durch:

(a) Filtrieren zur Entfernung von teilchenförmigen Material;

(b) Zugeben eines Reduktionsmittels zur Reduktion von gegebenenfalls vorhandenen Chlor- und/oder Ferriionen, wodurch deren störender Einfluß bei dem Test auf ein Minimum herabgesetzt wird;

(c) gegebenenfalls Zugeben von Thorium zur Herabsetzung einer störenden Beeinflussung durch Hexametaphosphat auf ein Minimum; und/oder

(d) gegebenenfalls Zugeben einer Säure zur Herabsetzung einer störenden Beeinflussung durch Hexametaphosphat auf ein Minimum; und

(e) Kochen des genannten vorbehandelten Probenanteils.

5. Ein Verfahren wie in einem der Ansprüche 1 bis 4 beansprucht, wobei die Carbonsäuregruppen in einem wasserlöslichen Polycarboxylat vorliegen.

6. Ein Verfahren zur Bestimmumg der Konzentration von Sulfonsäuregruppen in einer wässerigen Lösung, bestehend im wesentlichen aus:

(a) dem Einstellen des pH-Wertes eines Probenanteils der genannten wässerigen Lösung auf einen pH-Wert unter 3,0;

(b) dem Zugeben einer wirksamen Menge einer wässerigen Lösung eines metachromatischen Farbstoffes zu dem in Stufe (a) erhaltenen Probenanteil mit eingestelltem pH-Wert, wobei "wirksame Menge" eine Menge der Farbstofflösung bedeutet, die, wenn sie zu dem in Stufe (a) erhaltenen Probenanteil zugesetzt wird, zu einem Molverhältnis von Farbstoff zu Sulfonsäuregruppe führt, das in dem Gemisch 0,1:1 bis 100:1 beträgt, wobei eine Verschiebung der Wellenlänge der maximalen dekadischen Extinktion des Farbstoffes für jenen Teil des Farbstoffes bewirkt wird, der sich mit den anionischen Ladungen der Säuregruppen abgleicht;

(c) dem Messen der dekadischen Extinktion des aus Stufe (b) erhaltenen Gemisches bei der genannten verschobenen Wellenlänge maximaler dekadischer Extinktion; und

(d) dem Vergleichen der dekadischen Extinktion von Stufe (c) mit dekadischen Extinktionen einer Eichkurve, die mit bekannte Konzentrationen von Sulfonsäuregruppen enthaltenden Standardproben erhalten worden ist, wobei die Konzentration der Sulfonsäuregruppen in dem genannten Probenanteil bestimmt wird.

7. Ein Verfahren wie in Anspruch 6 beansprucht, wobei der Farbstoff Nilblau A, Neutralrot, Safrin O, Methylenblau, Methylrot, Toluidinblau, Neumethylenblau, Chinalizarin, Tetrachrom, Brilliantblau G, Beizenschwarz II oder Pinacyanolchlorid ist.

8. Ein Verfahren wie in Anspruch 7 beansprucht, wobei der Farbstoff Pinacyanolchlorid ist, die Konzentration von Pinacyanolchlorid $1 \times 10^{-6}$ M bis $1 \times 10^{-3}$ M beträgt, und die dekadische Extinktion bei einer Wellenlänge zwischen 480 nm und 490 nm gemessen wird.

9. Ein Verfahren wie in einem der Ansprüche 6 bis 8 beansprucht, wobei der Ausgangsprobenanteil der wässerigen Lösung vorbehandelt worden ist durch:

(a) Filtrieren zur Entfernung von teilchenförmigem Material;

(b) Zugeben eines Reduktionsmittels zur Reduktion von gegebenenfalls vorhandenen Chlor- und/oder Ferriionen, wodurch deren störender Einfluß bei dem Test auf ein Minimum herabgesetzt wird:

(c) gegebenenfalls Zugeben von Thorium zur Herabsetzung einer störenden Beeinflussung durch Hexametaphosphat auf ein Minimum; und/oder

(d) gegebenenfalls Zugeben einer Säure zur Herabsetzung einer störenden Beeinflussung durch Hexametaphosphat auf ein Minimum; und

(e) Kochen des genannten vorbehandelten Probenanteils.

10. Ein Verfahren wie in einem der Ansprüche 6 bis 9 beansprucht, wobei die Sulfonsäuregruppen in einem Copolymer aus einem ungesättigten Carbonsäuremonomer und einem ungesättigten Sulfonatmonomer vorliegen, und die Verhältnisse der betreffenden Monomeren im Bereich von 99:1 bis 1:99 liegen.

**Revendications**

1. Procédé pour déterminer la concentration de groupes d'acides polycarboxyliques et/ou sulfoniques qui sont présents dans une solution aqueuse, qui consiste essentiellement:

(a) à régler le pH d'une portion de l'échantillon de ladite solution aqueuse entre 3,0 et 12,0;

(b) à ajouter une quantité efficace d'une solution aqueuse d'un colorant métachromatique à la portion d'échantillon à pH réglé obtenue au stade (a), l'expression "quantité efficace" désignant une quantité de la solution de colorant qui, quand on l'ajoute à la portion d'échantillon réglée obtenue au stade (a), donne un rapport molaire du colorant au groupe acide compris entre 0,1:1 et 100:1 dans le mélange, ce qui provoque un déplacement à la longueur d'onde du colorant du pouvoir absorbant maximal pour cette portion du colorant venant s'aligner avec les charges anioniques des groupes acides;

(c) à mesurer le pouvoir absorbant du mélange provenant du stade (b) à ladite longueur d'onde déplacée du pouvoir absorbant maximal; et

(d) à comparer le pouvoir absorbant du stade (c) avec les pouvoirs absorbants d'une courbe d'étalonnage obtenue avec des échantillons normalisés contenant des concentrations connues de groupes acides sulfoniques et/ou carboxyliques, pour ainsi déterminer la concentration des groupes acide carboxylique et/ou sulfonique dans ladite portion de l'échantillon.

2. Procédé selon la revendication 1, dans lequel le colorant est le bleu Nil A, le rouge neutre, la safrine O, le bleu de méthylène, le rouge méthyle, le bleu de toluidine, le nouveau bleu de méthylène, la quinalizarine, le tétrachrome, le bleu brillant G, le noir mordant II ou le chlorure de pinacyanol.

3. Procédé selon la revendication 2, dans lequel le colorant est le chlorure de pinacyanol, la concentration du chlorure de pinacyanol est comprise entre $1\times10^{-6}$ M et $1\times10^{-3}$ M et on mesure le pouvoir absorbant à une longueur d'onde comprise entre 590 et 640 nm.

4. Procédé selon l'une quelconque des revendications 1 à 3, dans lequel on soumet la portion d'échantillon de départ de la solution aqueuse à un prétraitement consistant:

(a) à filtrer pour éliminer les matières particulières;

(b) à ajouter un agent réducteur pour réduire le chlore et/ou le fer ferrique, s'il est présent, pour abaisser au minimum leur interférence dans le test;

(c) à ajouter facultativement du thorium pour réduire au minimum l'interférence de l'hexamétaphosphate; et/ou

(d) à ajouter facultativement un acide pour réduire au minimum l'interférence de l'hexamétaphosphate; et

(e) à faire bouillir ladite portion d'échantillon prétraitée.

5. Procédé selon l'une quelconque des revendications 1 à 4, dans lequel les groupes acides carboxyliques sont présents dans un polycarboxylate hydrosoluble.

6. Procédé de détermination de la concentration des groupes acides sulfoniques dans une solution aqueuse, consistant essentiellement:

(a) à régler le pH d'une portion d'échantillon de ladite solution aqueuse à une valeur inférieure à 3,0;

(b) à ajouter une quantité efficace d'une solution aqueuse d'un colorant métachromatique à la portion d'échantillon à pH réglé obtenue au stade (a), l'expression "quantité efficace" désignant une quantité de la solution de colorant qui, quand on l'ajoute à la portion d'échantillon réglée obtenue au stade (a), donne un rapport molaire du colorant au groupe acide compris entre à, 1:1 et 100:1 dans le mélange, ce qui provoque un déplacement à la longueur d'onde du colorant du pouvoir absorbant maximal pour cette portion du colorant venant s'aligner avec les charges anioniques des groupes acides;

(c) à mesurer le pouvoir absorbant du mélange provenant du stade (b) à ladite longueur d'onde déplacée du pouvoir absorbant maximal; et

(d) à comparer le pouvoir absorbant du stade (c) avec les pouvoirs absorbants d'une courbe d'étalonnage obtenue avec des échantillons normalisés contenant des concentrations connues de groupes acides sulfoniques pour déterminer une concentration des groupes acide sulfonique dans ladite portion de l'échantillon.

7. Procédé selon la revendication 6, dans lequel le colorant est le bleu Nil A, le rouge neutre, la safrine O, le bleu de méthylène, le rouge de méthyle, le bleu de toluidine, le nouveau bleu de méthylène, la quinalizarine, le tétrachrome, le bleu brillant G, le noir mordant II ou le chlorure de pinacyanol.

8. Procédé selon la revendication 7, dans lequel le colorant est le chlorure de pinacyanol, la concentration du chlorure de pinacyanol est comprise entre $1\times10^{-6}$ M et $1\times10^{-3}$ M et on mesure le pouvoir absorbant à une longueur d'onde entre 480 et 490 nm.

9. Procédé selon l'une quelconque des revendications 6 à 8, dans lequel on soumet la portion d'échantillon de départ de la solution aqueuse à un prétraitement qui consiste:

(a) a filtrer pour éliminer les matières particulières;

(b) à ajouter un agent réducteur pour réduire le chlore et/ou le fer ferrique, s'il est présent, pour réduire ainsi au minimum leur interférence avec le test;

(c) à ajouter, facultativement, du thorium pour réduire au minimum l'interférence de l'hexamétaphosphate; et/ou

(d) à ajouter, facultativement, un acide pour réduire au minimum l'interférence de l'hexamétaphosphate; et

(e) à faire bouillir ladite portion d'échantillon prétraitée.

10. Procédé selon l'une quelconque des revendications 6 à 9, dans lequel les groupes acide sulfonique sont présents dans un copolymère d'un monomère carboxylique insaturé et d'un sulfonate monomère insaturé, et les rapports des monomères respectifs sont compris entre 99:1 et 1:99.

FIG. 1

Alsorbance vs LAS Concentration (mg/1)
pH-2.2
dye -pinacyanol chloride
wavelength - 485 nm
cell size - 50 nm
Spectrophotometer - Baush & Lomb/Shimadzu
Spectronic 200 uv

Absorbance Units

LAS Concentration (mg/1)

EP 0 144 130 B1

FIG. 2

Absorbance vs Polyacrylate Concentration (mg/1)
pH-6.8
dye-pinacyanol chloride
wavelength - 600 nm
cell size - 1 cm
spectrophotometer - Bauch & Lomb/Shimadzu
                    Spectronic 200 uv

FIG. 3

Absorbance vs Polyacrylate Concentration (mg/1)
pH- 6.8
dye-nile blue A
wavelength- 634 nm
cell size – 1cm
spectrophotometer- Bausch & Lomb/Shimadru
Spectronic 200 uv

Absorbance Units

0.8
0.7
0.6
0.5

Polyacrylate Concentration (mg/1)

0.0    1.0    2.0    3.0    4.0    5.0

EP 0 144 130 B1

FIG. 4

Absorbance vs Carboxylic/Sulfonic Acid
Copolymer Concentration
pH – 2.2
dye – pinacyanol chloride
wavelength – 485 nm
cell size – 50 nm
spectrophotometer – Baush & Lomb/
Shimadzu Spectronic 200 uv

Absorbance Units

Copolymer Concentration (mg/l)

EP 0 144 130 B1